# EUROPEAN PATENT APPLICATION

(11) **EP 3 035 693 A1**
(43) Date of publication of application: **22.06.2016**
(21) Application number: 14199305.5
(22) Date of filing: 19.12.2014
(51) Int. Cl.: H04N 21/422, H04N 21/432, H04N 21/442

(54) **Improved use and creation of content files**

(71) Applicant: Koninklijke KPN N.V., 2516 CK The Hague (NL)
(72) Inventor: van Steenbergen, Ate, 9737 NN Groningen (NL); Alberts, Albert, 9711 HT Groningen (NL)
(74) Representative: Wuyts, Koenraad Maria

(57) **Abstract**

Device are described which can play, present or create a content file for enjoyment by the user, for example an audio track, film, image file etc. Devices comprise a sensor to acquire sensor data and a processing unit to create metadata for the content file. The sensor acquires sensor data during the playing, playback or creation of the content file and the processing unit creates metadata comprising data derived from the acquired sensor data and associates this metadata with the content file. Thereby information regarding the circumstances under which the content is enjoyed, played or created can be stored and transferred with the content. A new content file is also described, comprising content and associated metadata comprising data representing sensor data acquired during a previous playing of the content. A method and application packages are also described.

## Description

The invention relates to a device arranged to play a content file, a method of creating a content file on a device, a file arrangement for an electronic device, an application package to play a content file, a device for creating a content file and an application package for creating a content file.

### Background

User enjoyment of electronic content has become increasingly sophisticated with the advent of personal computers, social media and the development of increasingly complex mobile devices such as smartphones and tablet devices. Users can now create and access content almost anywhere and their enjoyment of such content has become increasingly interactive through the use of social media platforms. The content itself now typically includes a wide range of electronic data types including digital photographs and other image files, films, music files, video files, games, comments, stories and even data concerning the user themselves including for example biometric and recorded biological data and information such as location or geographical position of the user.

This content and data can now be created by the user, freely shared and accessed often with little time lag between its creation and access by other users.

However, while the user can freely create content, finding content of interest to the user is another matter and users are reliant on explicit tagging within platforms and on personal networks of contacts in order to find content that may be relevant to them. In addition to this while content can freely be created it is incumbent on the user himself to correctly tag his own content so that other users can find it in the future, should they so wish.

US 2013/0185750 describes a method of providing, or targeting, content to a user by acquiring data from sensors, correlating the data and using it to decide which third party content, for example advertisements, should be included in a data stream already being delivered to a user.

An alternative method which allows improved handling of, and interaction with, content files is through the use of metadata, which can be attached or added to content files themselves to provide extra information about the content. Metadata is extra data attached to, inserted into, or associated with, a content file which while being separate from the content itself nevertheless includes important information about the content. Metadata might include information about who made the content, the identity of the maker for example, or it might identify the equipment with which the file was created. A photo file might also include metadata about the exposure settings under which the photograph was taken. A film might include the total running length. Audio file metadata often includes important information such as the name of the artist, total running time and the genre of the music. The latter is important in the creation of playlists.

Metadata is typically included in the content file itself according to a known metadata standard, for example the Extensible Metadata Platform standard, an ISO standard, and frequently referred to as XMP, and as is known, the information stored in metadata can be used to select, or access, appropriate content.

Users can create and access content, but they are still limited in the extent to which they can fully record, communicate or access an actual experience.

It is a problem to record full user experience.

### Summary

A solution to the problem is provided by a device arranged to play a content file, the device comprising a sensor to acquire sensor data, a processing unit to create metadata for the content file, where the sensor is arranged to acquire sensor data during playing of the content file, and the processing unit is arranged to create metadata associated with the content file and further where the metadata comprises data derived from the acquired sensor data.

In an embodiment the device is typically an electronic device for playing, or otherwise presenting, content such as a music file, a video or film, a game, a image file or other file representing an image or for example a photograph, or for presenting the user with access to a discussion forum or other site on which users can upload links and statements, interact with each other and post comments.

In a typical embodiment a content file represents a single playable or presentable item, for example an individual song, an individual film, an individual video, an electronic game (for example playable on an XBOX, a Wii, a Playstation, or PCgame), an individual photograph, a single post or comment etc. but in an alternative embodiment could also represent part of an individual item. In this latter embodiment individual films, photos, comments etc. may be spread over more than one file, for example in order to optimise file administration or file storage in the device or on a social media site. In such cases a single file might represent part of an item, for example part of a song, film, photograph or post etc.

In an embodiment the device comprises a sensor for recording data. The sensor may be integral to the device, or attached or otherwise coupled to it so that data can pass between the device and the sensor, or may be provided in the form of an application or other software package uploaded or downloaded onto the device.

In a further embodiment there may be more than one sensor. Sensors may be arranged to sense different phenomena, for example temperature and pressure, or may be arranged to sense the same phenomena, for example temperature, and may be provided in multiple to allow for redundancy.

In an embodiment the sensor is able to acquire sensor data during the playing, or playback, or presentation of the content file to the unit. Therefore the device may be arranged to record data via the sensor during play or playback of a file, for example during playing of a song if the content file is a music file, or when a file is otherwise enacted or shown on the device, for example during showing of a photograph if the file represents a photograph or during the playing of a game if the file represents a video game. With regard to the playing of a game, if the game is not played sequentially in time, the time can be recorded relative to a certain scene within the game.

In an alternative embodiment the device is arranged to create a content file. In a further embodiment this means during recording of a content file, for example during the recording of a sound sample or a video. In an alternative embodiment this means creation of a content file from original data, for example during creation of a photograph file in an application, for example creation of a jpeg from raw data derived from a photographic camera. In this embodiment the device comprises a sensor to acquire sensor data and a processing unit to create metadata for the content file. The sensor is arranged to acquire sensor data during creation, or recording, of the content file and the processing unit is arranged to create metadata associated with the content file and wherein the metadata comprises data derived from the acquired sensor data.

In this embodiment there is at least one sensor which may be integral to the device or attached or otherwise coupled to it and which records or otherwise acquires data during recording of the content file.

In an embodiment either the sensor may acquire data during the total length of time for which the content file is played or recorded, or alternatively, the sensor may only acquire data during a portion of time for which the content file is played, recorded or otherwise presented to the user.

In an embodiment the device, either for playing or for recording of the content file, comprises a processing unit arranged to create metadata for a content file, which metadata comprises data derived from the acquired sensor data. The sensor data is therefore transcribed, converted or otherwise inserted into metadata for the content file.

In an embodiment the processing unit also processes the recorded sensor data, for example by calculating an average value for a set of data or calculating the median (value of data recurring most frequently in a set of recorded data) or calculating other indicators of the spread of data, for example standard deviation, maximum value and minimum value. In this way, a large amount of recorded data can be reduced to a representative value with a calculated, or estimated, accuracy. This has the advantage of reducing the amount of data. In an alternative embodiment sensor values may be averaged over a time interval, for example a minute. In an alternative embodiment, data may be transformed into another system, for example distance in miles transformed into distance in kilometres, pressure in PSI transformed into N/m^2 etc.

In an embodiment the processing unit may use sensor data from the entire quantity of sensor data acquired by the sensor, or alternatively the processing unit may use only a portion of the sensor data acquired by the sensor. For example, the processing unit may use only a particular subgroup of data types acquired by the sensor, or alternatively, the processing unit may use only sensor data acquired over a specific time period, or during a specific portion of the time over which the sensor acquires data.

In an embodiment the acquired data is put into, or inputted into, the content file as metadata. In an alternative embodiment the acquired data is put into, or inputted into, a separate metadata file which is associated with the content file in such a way that the data in it can be read, or understood, as the metadata for the content file.

In this way real time sensor data can be added to content during playing, or playout, or recording, of the content. Further, in this way extra information about the circumstances under which the content file is accessed or recorded, or about the environment in which it is accessed, recorded or enjoyed by the user, can be sensed, or otherwise detected, and saved as metadata for the content file. The extra information is saved either in the content file itself, along with the content file itself in an associated file, or saved in a way in which the information relates to the content file.

This allows new possibilities for the identification and enjoyment of relevant content files by the user because it allows information about the circumstances or environment in which content is created or enjoyed to be recorded and saved along with the content. By saving this extra data as metadata it can be arranged to follow the original content file and therefore can always be used to identify and access the content. A system is therefore created by which the content file can be accessed by reference to the circumstances under which it was created, or previously accessed or enjoyed.

In an embodiment the device also comprises a memory or other form of storage, or has access to a form of storage device, in which the content file can be stored. The new content file with metadata is stored in memory, or alternatively on disk. Alternatively, the new content file with metadata could be sent immediately to another device upon creation of the metadata. In a particular embodiment the file with or containing the meta-data is stored during creation, at least temporarily, on a disk or in memory, before it is sent or copied to another storage system.

In an embodiment the device is one of a content player; a media player; a photo viewer; a video player; a music player; a digital audio player; a mobile device; a smartphone; a game console; a tablet; a laptop; a personal computer. In further embodiments the device can be an iPod, iPad or a smart watch or other smart wearable device.

In an embodiment the device includes an application arranged to play content. The application can be a native or hardware application, an application fixed in hardware, or software, or firmware, or an imported or downloaded application, sometimes referred to as an 'app'.

In an embodiment the sensor can be arranged to acquire or record data on any one of temperature, light intensity, average light colour, λmax (the wavelength of maximum absorbance in the spectrum), sound, air humidity, pressure (for example air pressure or water pressure), heart-beat, blood glucose, blood pressure, location, speed of the device, or acceleration of the device. For example, temperature can be measured in Celsius or Fahrenheit; light colour can be measured with recourse to wavelengths, or relative wavelengths of red-yellow-blue, or in average wavelength, by measuring in nanometers (nm); sound can be measured in decibels (dB, dBA); heartbeats can be measured in beats per minute, blood glucose can be measured in mmol/L or mg/dL; blood pressure is usually measured in mm of mercury but can be measured in any unit suitable for the blood pressure monitor which is used; location can be measured, or calculated, with reference to a geolocator or other locator or location finding device; velocity or speed of the device can be measured in metres per second (m/s); acceleration can be measured in metres per second squared (m/s^2). Measurement of various phenomena can be measured or sensed using known sensor technology. For example, acceleration can be measured by an accelerometer either incorporated into or attached to the device.

In a further embodiment the sensor can be built into the device but in alternative embodiments can be attached or coupled to the device either physically and/or electronically. Embodiments of coupling include for example WiFi, HDMI, Bluetooth, USB, BNC Coax connector. The sensor data can in fact be any data recorded by a sensor during play or play back of a content file.

The invention also relates to a method of creating a content file on a device. The method is suitable for use by a device working the method or by a software package or an application package arranged to perform the method. In an embodiment the application package may be comprised on an electronic device such as a content player; a media player; a photo viewer; a video player; a music player; a digital audio player; a mobile device; a tablet; a laptop; a personal computer; a game console. However in a further embodiment the software package or application package may be distributed over an arrangement of nodes and devices, for example a device coupled to a node, for example a home gateway.

In an embodiment the method includes playing the content file for experience by the user, acquiring sensor data during the playing of the content file, creating metadata derived from or representing the acquired sensor data, and associating the metadata with the content file.

In an embodiment the metadata replaces previously created meta data, or is written over previously created metadata. This has the advantage that storage space for the content file and its associated metadata is minimised and additionally has the separate advantage that content files can be kept up to date with the most recent sensor data, or sensor data from the most recent playing of the content file.

In an embodiment the metadata can be added to previously created metadata. For example if previous metadata was derived from a light sensor and new sensor data is acquired from a thermometer or other temperature sensing device.

In an alternative embodiment a lock can be included on the metadata to stop it from being changed. This has the advantage that the user can choose to keep a version of metadata that is particularly relevant or interesting. In this way the user can choose to keep metadata representing a particular experience of the content file. In an embodiment the lock can be a flag. In an alternative embodiment the lock can be a an attribute within the metadata file. Typically a flag is something the operating system can handle whereas something in the metadata file can be read from a content processor.

The invention also relates to a file arrangement for an electronic device. The file arrangement comprises content for playing on the electronic device, metadata associated with the content, wherein the metadata comprises data derived from or representing sensor data acquired during a previous playing of the content.

In an embodiment the metadata is comprised in the content file itself. In a further embodiment the metadata is included in the header of the content file. This has the advantage that the metadata can never be lost or become disassociated with the content file.

In an embodiment the metadata is comprised in a separate file which is associated with the content file. In a further embodiment the separate file may be stored along with the content file. This has the advantage that more complex arrangements of metadata, and potentially very long arrangements of metadata, can be stored without impacting on how the original content file is stored. In this embodiment care must be taken to ensure that the associated metadata file maintains a connection to the content file.

The invention also relates to an application package to play a content file in which the application package comprises a data acquisition component arranged to acquire data through a sensor, a player to play the content file, and a processing component arranged to create metadata for the content file. The data acquisition component is arranged to acquire data through the sensor during playing of the content file, and the processing component is arranged to create metadata comprising the acquired data derived and is further arranged to associate the metadata with the content file.

In an alternative embodiment the application package is arranged to create a content file, for example to create a photograph file from raw camera data, or record or create a music file from a live recording. In this embodiment the application package comprises a data acquisition component arranged to acquire data through a sensor; a first processing component to create the content file; and, a second processing component arranged to create metadata for the content file. The data acquisition component is arranged to acquire data through the sensor during creation of the content file, and the second processing component is arranged to create metadata comprising the acquired data derived and is further arranged to associate the metadata with the content file created by the first processing component.

In further embodiment the application package, whether for playing or creating the content file, may include a sensor component.

The module can be a software module

In an embodiment the application package is arranged to store the metadata by overwriting previously created metadata.

In an embodiment the metadata is in a form prescribed by an XMP standard, although this is not necessary and other standards are possible. In particular an independent solution for metadata may be used.

In an embodiment the metadata associated with the content file is comprised in the content file.

The invention provides a way to enrich content with sensor data which describes circumstances around a playing, or playback, of the content. The metadata relates to a situation in which the user has played, played back, accessed, browsed, or rendered the content file. The invention thereby offers new opportunities to enjoy and use content.

These and other embodiments are described further in the figures.

### Figures

Figure 1 shows an embodiment of the invention.
Figure 2 shows an alternative embodiment of the invention.
Figure 3 shows an embodiment of the invention.
Figure 4 shows a file arrangement used in the invention.

### Detailed Description

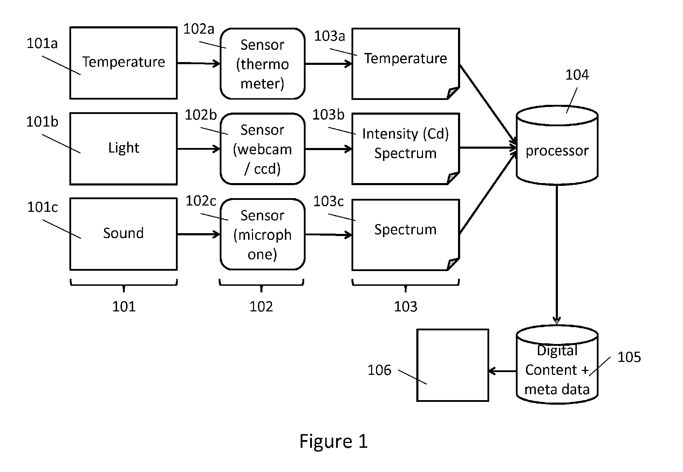

Fig. 1 shows a general embodiment of the invention in which sensor enriched content is added to a content file in the form of metadata.

Physical properties 101 available during the playing, playback or presentation on a device of the content in a content file, or during the recording or creation of the content file, and include as an example temperature 101 a, light 101b and sound 101 c. Physical properties 101 can be measured using sensors 102. For example temperature 101 a can be measured using a sensor thermometer 102a, light 101b can be measured using a sensor in a webcam 102b, and sound 101c can measure using a sensor microphone 102c. As an alternative, light can be measured using another light sensor 102b present in the playing device.

Sensors 102 produce sensor data 103. For example sensor thermometer 102a produces temperature data 103a, webcam sensor 102b produces light spectrum data 103b for example a light intensity spectrum, and sensor microphone 102c produces a sound spectrum 103c.

Sensor data 103 is passed to processing unit 104 which uses the sensor data 103 to create metadata 105 associated with, coupled to or attached to content file 106.

The physical properties 101 which are measured by sensor, or sensors, 102 are measured during the playing, or playback, or presentation of content file 106 to the user, or during the accessing of the content file 106 by the user, or during the creation or original recording of the content file 106 by the user.

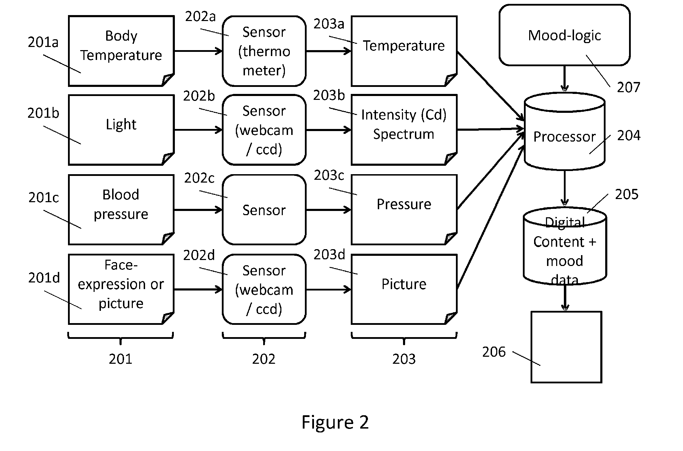

Figure 2 shows an alternative embodiment of the invention. As previously, physical properties 201, including temperature 201 a, light 201 b and sound 201 c, are recorded during playing or playback of content file 206, or during creation or recording of the content file 206, by sensors 202 including sensor thermometer 202a, webcam sensor 202b, and sensor microphone 202c. The sensor data 203 produced, including temperature data 203a, light spectrum data 203b and sound spectrum 203c, is passed to processing unit 204 which uses the sensor data 203 to create metadata 205 associated with, coupled to or attached to content file 206. However in this example facial expression 202d can also be detected using, for example, a webcam 202d in the device used for playing the content file 206. In this case webcam 202d produces an image 203d which is passed to processing unit 204 and mood logic 207, which may be incorporated into processing unit 204, or which may be separate, is used to analyse image 203d to produce mood data allowing processing unit 204 to include user mood in the metadata 205 created as a result of the acquired sensor data.

The physical properties 201, including mood 201 d, which are measured by sensor, or sensors, 202 are measured during the playing, or playback, or presentation of content file 206 to the user, or during the accessing of the content file 206 by the user, or during the creation or recording of the content file 206 by the user.

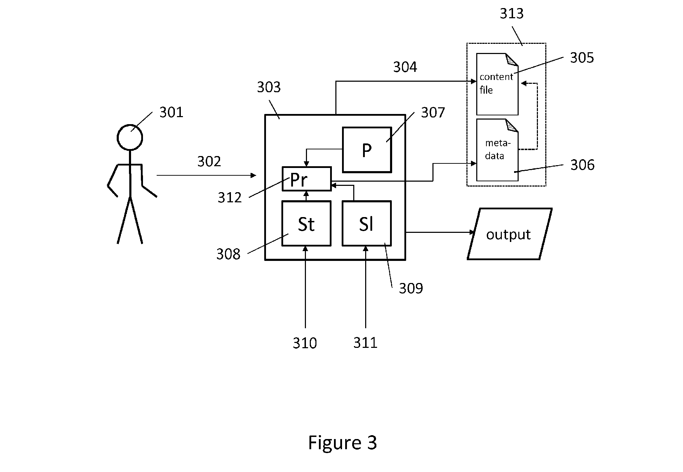

Figure 3 shows an embodiment of the invention. User 301 opens, runs up or otherwise starts 302 device 303, which may be a media device or player, a content player, a photo viewer, a video player, a music player, a digital audio player, a mobile device, a smartphone, a game console, a tablet, a laptop or a personal computer, a smartwatch or other wearable device for example. Using device 303 the user 301 selects 304 content file 305 to play and plays it. Content file 305 may be associated with metadata 306, although this is not necessary. Metadata 306 may not yet exist.

Device 303 plays, plays back, or otherwise presents content file 305 for the enjoyment of user 301 by using player 307 to provide the content of content file 305 as output. Player 307 may be a media player, a sound file player, a photo viewer, a video codec program or other application, or application package, or component which allows user 301 to watch, see, listen to, record, create or otherwise experience the contents of content file 305. During playing of content file 305 sensors 308 and 309 measure properties 310 and 311 which are recorded as data and provided to processing unit 312. Processing unit 312 produces metadata 306 which is either inside content file 305 or associated with it, for example as separate metadata file 306, stored with content file 305 as duplex 313 either in or within player 303 or in some way accessible by player 303. In an embodiment player 307 provides the content to processor 312 for the addition of metadata.

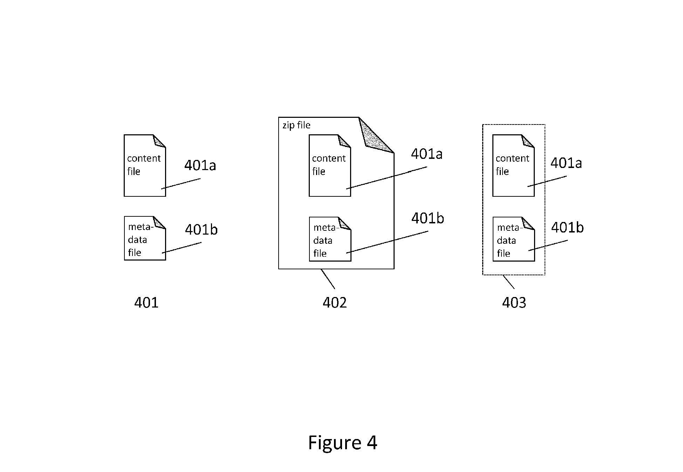

Figure 4 shows a file arrangement 401 which can be used in the invention. File arrangement 401 includes content file 401a and metadata file 401 b. In an embodiment the contents of the original content file 401 and the original file name will not be changed. The metadata file can be, for example, a metadata file using the XML-format, in which case the filename of metadata file 401b is the same as the file name for content file 401 a but in th is instance with a .xml file extension.

Content file 401 a and metadata file 401 b can be combined into one file 402 for transport. File 402 can be a zip file which may or may not be created according to a zip file standard and may or may not have a proprietary zip file extension.

When being stored the two files, content file 401 a and metadata file 402

The device or player handles the combined file 402 as two files 403, the first 401 a for playing the content and the second 401 b which comprises metadata, and which are associated with each other.

In all embodiments metadata may be included in the content file itself, or in a separate metadata file associated with the content file, and may be created using any method of creating metadata. An independent method of creating metadata can also be used.

As an example of a possible embodiment of metadata, presented in this instance using Extensible Markup Language (XML), sensor data may be recorded as metadata using the following example shown in Table 1.

Table 1 shows an example of data in a form suitable for metadata according to the description. The fields, items and units of measurement are not limited to those shown and the flexibility of XML allows for this.

**Table 1. An example of suitable metadata written in XML**

| Line no. | Content |
|---|---|
| 1 | <?xnl version="1.0" encoding="utf8"?> |
| 2 | <contentMetaData name="myContentMetaData" xml:lang="en"> |
| 3 | <sensorInput> |
| 4 | <sensor name="AmbientTemperatureSensor"> |
| 5 | <sensorType>Temperature</sensorType> |
| 6 | <sensorUnit>Celsius</sensorUnit> |
| 7 | <sensorData> |
| 8 | <fullLength>true</fullLength> |
| 9 | <description>Ambient temperature</description> |
| 10 | <value>21 </value> |
| 11 | </sensorData> |
| 12 | </sensor> |
| 13 | <sensor name="HeartbeatSensor"> |
| 14 | <sensorType>Heartbeat</sensorType> |
| 15 | <sensorUnit>bpm</sensorUnit> |
| 16 | <sensorData> |
| 17 | <fullLength>false</fulLength> |
| 18 | <description>Horror scene</description> |
| 19 | <startTime>1:24:30</startTime> |
| 20 | <endTime>1:24:50</endTime> |
| 21 | <value>95</value> |
| 22 | </sensorData> |
| 23 | </sensor> |
| 24 | <sensor name="MicrophoneSensor"> |
| 25 | <sensorType>Sound</sensorType> |
| 26 | <sensorUnit>dB</sensorUnit> |
| 27 | <sensorData> |
| 28 | <fullLength>false</fullLength> |
| 29 | <description>Scream of fear</description> |
| 30 | <startTime>1:24:36</startTime> |
| 31 | <endTime>1:24:41</endTime> |
| 32 | <value>127</value> |
| 33 | <rawData>externalFileWithScreamsOfFearRecording.mp3</rawData> |
| 34 | </sensorData> |
| 35 | </sensor> |
| 36 | </sensorInput> |

In the information in Table 1 line numbers are added to the beginning of the line to explain the different sections and content of the file. As is known to the skilled person these line numbers and the following "I" character are not part of the actual file.

The first two header lines (01 and 02) of the file indicate that the content of the file will be XML-formatted, encoded in the UTF-8 character set and the default language of is English.
**01|<?xml version="1.0" encoding="utf8"?>**
**02|<contentMetaData name="myContentMetaData" xml:lang="en">**

In this example the attribute name is set to myContentMetaData but in an embodiment it can be set to the name of the linked content file. Preferably the name of the xml-file should be set to the name of the content file but with a different extension, as is known in the art.

As will be understood by the skilled person this example file can easily be enhanced with extra information including references back to the content file, its creation date, the last time sensor data was added, the last time the content file was played, et cetera.

In this example we include simple data from three sensors, a temperature sensor, a heartbeat sensor, or heart monitor, and a microphone.

Information can be stored in an XML-file in two different ways, stored "inline" as attributes or stored within tags.

For example the line 2 name="myContentMetaData" is the inline form while line 3 shows the opening tag <sensorlnput> and line 36 </sensorlnput> shows the closing tag of the enclosed information. Tags indicate sections, which can contain subsections ordata/information.

After the header lines the file consists of a main section <sensorlnput> with subsections headed <sensor> and it can be seen in this example that the sensorlnput section starts at line 3 and ends at line 36. This section can contain one or more sensor subsections. The subsections have a name attribute to give a descriptive name of the sensor. In the sample below we see three sensor subsections: AmbientTemperatureSensor sensor section (lines 4-12); HeartbeatSensor sensor section (lines 13-23); MicrophoneSensor sensor section (lines 24-35).

The first sensor data stored in the file is sensor data from a temperature sensor.
**04| <sensor name="AmbientTemperatureSensor">**
**05| <sensorType>Temperature</sensorType>**
**06| <sensorUnit>Celsius</sensorUnit>**
**07| <sensorData>**
**08| <fullLength>true</fullLength>**
**091 <description>Ambient temperature</description>**
**10| <value>21</value>**
**11| </sensorData>**
**12| </sensor>**

The recorded temperature data from a temperature sensor or thermometer is stored in this section. In an embodiment the AmbientTemperatureSensor section may comprise the following subsections: sensorType (line 5), comprising the type of sensor, in this case a temperature sensor; sensorUnit (line 6), comprising the unit of measurement, in this case Celsius, it an alternative embodiment it could be stored using another unit of temperature; and, sensorData (lines 7-11), which is where the sensed data values are inputted.

The subsection sensorData (lines 7-11) within the AmbientTemperatureSensor section may comprise several subsections including: fullLength (line 8), comprising a Boolean value (true/false), in which "true" indicates that the value is valid for the full play length of the media file and in which "false" indicates that the value is not valid for the full play length of the media file; description (line 9), comprising the description of the recorded sensor data; value (line 10), which comprises the recorded temperature in degrees Celsius.

In this example the value under **full length** is set to 'true' and this indicates that the temperature value measured remained valid throughout the playing of the file, in other words was neither rising nor falling to within the accuracy with which it can be measured by the sensor.

In another embodiment, the sensor data is measured at a small time interval throughout a certain time of the file duration or during the complete duration. In this case, the values of the sensor are recorded at a certain time-stamp, which can be absolute time, or any user understand or commonly accepted time such as BST, CET, EST etc, or relative to the start of the play of the file. In this case, if the interval is 1 second and the play-time was 45 minutes, then 2700 sensor data-values (data points, consisting of a time-sensorvalue pair) are recorded in the file.

In a further embodiment the processing unit may be arranged to input a value representative of the sensor data. For example, the actual data recorded by the sensor might have been fluctuating within a certain temperature range during playback of the content file so the value recorded may also be the average of the recorded data in certain embodiments.

Similar data and information is included for a second sensor, in this example a heart beat sensor.
**13| <sensor name="HeartbeatSensor">**
**14| <sensorType>Heartbeat</sensorType>**
**15| <sensorUnit>bpm</sensorUnit>**
**16| <sensorData>**
**17| <fullLength>false</fullLength>**
**18| <description>Horror scene</description>**
**19| <startTime>1:24:30</startTime>**
**20| <endTime>1:24:50</endTime>**
**21| <value>95</value>**
**22| </sensorData>**
**23| <sensor>**

The subsection sensorData (lines 16-22) within the HeartbeatSensor section has the same subsections with different data. The fullLength field (line 17), comprises the Boolean value false and indicates that the heartbeat is recorded during a certain timeframe during the playback or creation of the media file and not during entire playback or creation. The description field (line 18), comprises the description of the recorded sensor data. The media file is in this case a horror movie and in this example is one of the scary scenes. The startTime field (line 19) comprises the start time of the rise of the heart rate and the endTime field (line 20) comprises the end time of the risen heart rate. The value field (line 21) contains the recorded heartbeat rate itself. The heartbeat rate is most likely elevated due to the nature of the scene.

Similar data and information is included for a third sensor, in this case a sound sensor, or microphone, which can be used to record ambient sounds during the playing or play out, or enactment of a content file, or during its creation. In a further embodiment if the device were to comprise more than one sound sensor, i.e. to be connected or coupled to more than more microphone, then additional sound can be recorded during the recording of a sound file. For example, a recording can be made of a group of musicians playing together and a further recording made of the reaction of a further group of people listening to the playing.

However in this embodiment shown the metadata describes sound recorded during the playing of a film or video.
**24| <sensor name="MicrophoneSensor">**
**25| <sensorType>Sound</sensorType>**
**26| <sensorUnit>dB</sensorUnit>**
**27| <sensorData>**
**28| <fullLength>false</fullLength>**
**29| <description>Scream of fear</description>**
**30| <startTime>1:24:36</startTime>**
**31| <endTime>1:24:41</endTime>**
**32| <value>97</value>**
**33| <rawData>externalFileWithScreamsOfFearRecording.mp3</rawData>**
**34| </sensorData>**
**35| </sensor>**

In this embodiment the subsection sensorData (lines 27-34) within the MicrophoneSensor section comprises similar subsections as the embodiments above but comprises an additional subsection with a link to an external file: rawData (line 33). In this example and during playback of the media file someone in the audience screamed, this scream was recorded during the startTime and the endTime. The recorded sound was saved as a file with the name:

### externalFileWithScreamsOfFearRecording.mp3

Sound can be recorded throughout the play out of a file, or, alternatively, only recorded when ambient sound is recorded which is louder than a certain predetermined threshold. In this example an ambient scream was recorded during the playing of a file, a video for example, and in this case the sound recorded is given a **full length** false value because sound was not recorded over the full play out of the content file. Start and end times of the recorded sound are provided and a raw file of the sound is included in the metadata. The sound is measured in dB.

The metadata thus included can be used to record pertinent sensor data surrounding the playing of a content file and to store it such a way that it can be easily associated with the content file and can be stored with it and can travel with it, for example from device to device.

In general the sensorInput section contains data that is recorded during playback of the media file. The sensorInput section describes what and how the environment is recorded.

In a further embodiment the sensorInput section comprises a section in which generic data is recorded, for example based on the average of several personal sections. In this embodiment sensor data recorded as metadata is recorded and stored per user, in the sense that data refers to the playback experience of a particular user. In a further embodiment a generic section is created from the data in various aggregated personal sections. New personal sections can be added as different users play and experience the content of the file but in specific embodiment only one generic section contains the aggregated data from a subset of, or the total of, personal sections. Over time the generic section acquires data from an average audience. As the data from the sensorInput section is used for playback a group average can be derived from it.

The public sections can be enhanced with personal profile information from the recording, type of person, social status, music or movie preferences of individual users. This extra information can also be used during playback of the media file.

The invention as described allows information about the circumstances and surroundings during the playing of a content file to be recorded.

## Claims

1. A device arranged to play a content file, the device comprising:
- a sensor to acquire sensor data;
- a processing unit to create metadata for the content file; and wherein:
- the sensor is arranged to acquire sensor data during playing of the content file,
- the processing unit is arranged to create metadata associated with the content file and wherein the metadata comprises data derived from the acquired sensor data.

2. A device according to claim 1 wherein the device is one of a content player; a media player; a photo viewer; a video player; a music player; a digital audio player; a mobile device; a smartphone; a tablet; a laptop; a personal computer; a game console.

3. A device according to claim 1 wherein the device includes an application arranged to play the content file.

4. A device according to claim 1 wherein the sensor is arranged to acquire data on any one of temperature, pressure, light intensity, average light colour, λmax, maximum wavelength intensity, sound, air humidity, heart-beat, blood glucose, location, speed of the device, or acceleration of the device.

5. A method of creating a content file on a device, the method comprising
- playing the content file for experience by the user;
- acquiring sensor data during the playing of the content file;
- creating metadata derived from the acquired sensor data;
- associating the metadata with the content file.

6. A method according to claim 5 wherein the metadata is replaces previously created metadata.

7. A file arrangement for an electronic device comprising:
- content for playing on the electronic device;
- metadata associated with the content; and
**characterised in that** the metadata comprises data derived from sensor data acquired during a previous playing of the content.

8. A file arrangement according to claim 7 wherein the metadata is comprised in the content file.

9. A file arrangement according to claim 7 wherein the metadata is comprised in a separate file which is associated with the content file.

10. An application package to play a content file, the application package comprising:
- a data acquisition component arranged to acquire data through a sensor;
- a player to play the content file;
- a processing component arranged to create metadata for the content file; and wherein:
- the data acquisition component is arranged to acquire data through the sensor during playing of the content file, and
- the processing component is arranged to create metadata comprising the acquired data derived and is further arranged to associate the metadata with the content file.

11. An application package according to claim 10 further arranged to store the metadata by overwriting previously created metadata.

12. An application package according to claim 10 wherein the metadata is in a form prescribed by an XMP standard.

13. An application package according to claim 10 wherein the metadata associated with the content file is comprised in the content file.

14. A device arranged to create a content file, the device comprising:
- a sensor to acquire sensor data;
- a processing unit to create metadata for the content file; and wherein:
- the sensor is arranged to acquire sensor data during creation of the content file,
- the processing unit is arranged to create metadata associated with the content file and wherein the metadata comprises data derived from the acquired sensor data.

15. An application package to create a content file, the application package comprising:
- a data acquisition component arranged to acquire data through a sensor;
- a first processing component to create the content file;
- a second processing component arranged to create metadata for the content file; and wherein:
- the data acquisition component is arranged to acquire data through the sensor during creation of the content file, and
- the second processing component is arranged to create metadata comprising the acquired data derived and is further arranged to associate the metadata with the content file created by the first processing component.
